(19) Europäisches Patentamt
European Patent Office
Office européen des brevets

(11) EP 2 040 266 B1

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(51) Int Cl.:
***G21F 9/04*** *(2006.01)* ***G21F 9/12*** *(2006.01)*

(21) Anmeldenummer: **08162731.7**

(22) Anmeldetag: **21.08.2008**

(54) **Adsorption von Radionukliden**

Absorption of radionuclides

Adsorption de radionuclides

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **30.08.2007 DE 102007041361**

(43) Veröffentlichungstag der Anmeldung:
**25.03.2009 Patentblatt 2009/13**

(73) Patentinhaber: **LANXESS Deutschland GmbH**
**51369 Leverkusen (DE)**

(72) Erfinder:
- **Brings, Burkhard**
**51147, Köln (DE)**
- **Klipper, Reinhold**
**50933, Köln (DE)**

(56) Entgegenhaltungen:
**WO-A-2005/049190**
**DE-A1-102005 038 415**
**DE-A1-102006 011 316**
**GB-A- 2 356 583**
**US-E- R E34 112**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Anmeldung betrifft ein Verfahren zur Adsorption von Radionukliden aus Medien, bevorzugt Wässern oder wässrigen Lösungen wie sie beispielsweise in Kernanlagen, bevorzugt Kernkraftwerken anfallen, durch Kontaktieren des zu behandelnden Mediums, bevorzugt Wasser oder wässrige Lösungen, mit einem Mischbett, das zusätzlich mit wenigstens einer Deckschicht eines monodispersen, makroporösen Ionenaustauschers mit einem mittleren Perldurchmesser kleiner als der im Mischbett eingesetzten Ionenaustauscher versehen ist.

Medien im Sinne der vorliegenden Erfindung sind Lösungsmittel worin sich Radionuklide lösen können. Dies können organische Lösungsmittel oder wässrige Lösungen sein. Bevorzugt wird das vorliegende Verfahren für Wasser und darin gelöste Radionuklide, besonders bevorzugt wässrige Lösungen derselben, eingesetzt. Diese Medien können in Form von Kühlwasser, Kondenswasser oder Abwasser von Kernanlagen oder Anlagen, wo Radionuklide anfallen, vorliegen. Unter Kemanlagen werden im Rahmen der vorliegenden Erfindung Kernkraftwerke, Wiederaufbereitungsanlagen, Kernanreicherungsanlagen oder medizinische Einrichtungen wo mit Radionukliden gearbeitet wird, verstanden. Erfindungsgemäß besonders bevorzugt wird das vorliegende Verfahren bzw. die erfindungsgemäße Vorrichtung im Primärkreislauf von Kernkraftwerken eingesetzt.

Verschiedentlich wurde der Einsatz von Mischbetten zur Behandlung von Wasser in Kernreaktoren beschrieben. US Re 34 112 beschreibt die Reduktion kolloidal gelösten Eisens im Kondensatwasser eines Kernreaktors durch Kontaktieren desselben mit einem Mischbett-Ionenaustauscherharz, worin das Kationerharz eine sogenannte Core/Shell Morphologie aufweist und das Anionerharz aus gelförmigen Perlpolymerisaten mit Core/Shell Struktur hergestellt wird.

DE 43 38 851 A1 beschreibt die Aufbereitung von ABC-kontaminierten Wässern zu Trinkwasser mittels nassoxidativer Verfahren kombiniert mit einem Membranverfahren. Der Einsatz von Mischbett-Ionenaustauschern wird darin besonders effektiv für die Abtrennung von A- und C-Restkontaminationen hervorgehoben.

DE 197 47 076 A1 offenbart ein Verfahren und eine Vorrichtung zum Abtrennen von $^{7}Li$ oder Bor aus dem Primärkühlkreis eines Kernkranwerks. Hierin wird aber ein Ionenaustauscher Mischbett nicht zur Abreicherung von Radioisotopen sondern vielmehr zur Herstellung der Leitfähigkeit des Mediums durch Anreichern mit Ionen vorgeschlagen. Die Anreicherung der Ionenaustauscher im Mischbett mit Radioisotopen und somit die Entfernung aus einem Medium wie Wasser ist in diesem Verfahren der DE 197 47 076 A1 eher unerwünscht.

Aus US-A 5 308 876 ist ein Ionenaustauscher mit einem regenerierbaren Kationenaustauscherharz (der H-Form) und einem regenerierbaren Anionenaustauscherharz (der OH-Form), welche teilchenförmige organische polymere Adsorptionsmittel zum Adsorbieren und Entfernen von suspendierten Verunreinigungen sind, die in Spurenmengen in dem zu behandelnden Wasser vorhanden sind und hauptsächlich aus Metalloxiden bestehen, bekannt. Hervorgehoben wird in US-A 5 308 876 der Einsatz der Ionenaustauscher als Mischbett zur Entfernung des Crudeisens wie es in Kernreaktoren auftreten kann.

Schließlich wurde auf der EPRI Low Level Redwaste Conference im Juni 2005 von Terry Heller die Wirkung makroporöser Ionenaustauscherharze auf die Reinigung von Radionukliden vorgestellt. Die dabei vorgestellten Hochleistungs-Kationerharze sowie hochporösen Anionerharze und Mischbetten sind bzw. enthalten nur heterodisperse Ionenaustauscher.

Darüber hinaus empfehlen Produktbroschüren den Einsatz von Mischbetten zur Kondensataufbereitung allgemein in konventionellen Kraftwerken. Unter http://www.cwggmbh.de/produkte/ionenaustauscherharze/stark_kation.htm wird beispielsweise Amberjet® 1500 H, ein gleichförmiger (monodisperser) Gelaustauscher zum Einsatz in Mischbetten für die Kondensataufbereitung u.a. in Kraftwerken vorgeschlagen. Aber auch die Lanxess Deutschland GmbH offeriert beispielsweise Lewatit® MonoPlus M 500 KR oder Lewatit® MonoPlus S 100 KR für die Kondensataufbereitung von Nuklearanlagen als "nuclear resins" (siehe http://www.tas.co.yu/pr01e.htm).

Nun ist es aber äußerst wünschenswert, die Strahlendosis, der das Personal beispielsweise in einer Kernkraftanlage ausgesetzt ist, niedrig zu halten. Ein großer Teil dieser Strahlendosis wird bei der Durchführung von Überholungen, Wartungen und Reparaturvorgängen aufgenommen, wenn die Kernkrananlage abgeschaltet ist, wobei das Personal unter anderem einer Strahlung bei der Arbeit an Pumpen, Leitungen und dergleichen eines Reaktorwasserkreises außerhalb des Reaktorkerns ausgesetzt ist. Der Grund hierfür besteht darin, dass radioaktive Korrosionsprodukte sich auf den Oberflächen von Systemteilchen außerhalb des eigentlichen Kerns ablagern. $^{60}Co$ ist verantwortlich für den absolut größten Teil der radioaktiven Strahlung, die von diesen Korrosionsprodukten ausgeht. $^{60}Co$ hat ferner eine Halbwertszeit von 5,3 Jahren, was bedeutet, dass es praktisch nicht möglich ist, die Höhe der radioaktiven Strahlung dadurch zu verkleinern, dass man das Personal die Arbeit erst ausführen lässt, nachdem der Reaktor für eine gewisse Zeitspanne abgeschaltet gewesen ist.

Im Reaktorwasserkreis (Primärkreis) und im Speisewasserkreis verursacht das Wasser die Trennung kleiner Mengen von Material verschiedener Bauteile, mit denen es in Kontakt kommt. Ein großer Teil dieser Bauteile besteht aus rostfreiem Stahl, von welchem sich Eisen, Nickel und geringe Mengen Kobalt in Form von Ionen und Partikeln lösen. In älteren Anlagen sind Bauteile im Reaktor- und Speisewasserkreis, wie zum Beispiel Ventile, die Kobalt enthalten,

vorhanden, welche die Menge des abgeschiedenen Kobalts vergrößern. Die Metalle, die so in das Reaktorwasser und das Speisewasser gelangen, lagern sich als Oxide, sogenanntes "Crud", auf Oberflächen im Kreis ab. Der Crud-Überzug auf den Oberflächen besteht aus verschiedenen Arten von Metalloxiden, und diese sind, da sie sich beispielsweise auf Hüllrohren für nuklearen Brennstoff befinden, einer starken Neutronenstrahlung ausgesetzt. Dabei werden die Metallatome in dem Crud-Überzug in Nuklide überführt, von denen ein Teil radioaktiv ist. Partikel fallen ab und Ionen trennen sich von dem radioaktiven Crud-Überzug und gelangen auf diese Weise ins Wasser. Dabei werden die Partikel und Ionen zusammen mit dem Reaktorwasser zu Teilen transportiert, die außerhalb des Reaktorkerns liegen, wobei sie zu diesen Teilen radioaktives Material tragen. Die radioaktiven Partikel und die Ionen lagern sich dann als sekundär abgelagerter Crud-Überzug auf Oberflächen außerhalb des Kerns ab. Folglich entsteht ein radioaktiver Crud-Überzug auch außerhalb des Kerns. Dieser radioaktive Crud-Überzug und die aus zahlreichen Quellen stammenden radioaktiven Substanzen führen zu einem stark mit Radioaktivität belasteten Wasser. Dies führt dazu, dass das Personal bei der Wartung und bei Reparaturarbeiten radioaktiver Strahlung ausgesetzt ist.

Im erfindungsgemäß zu behandelnden Medium liegt also eine Vielzahl verschiedener radioaktiver Partikel und Ionen vor. Diese im weiteren Verlauf als Radionuklide bezeichneten radioaktiven Substanzen können in kolloidaler Form, als gelöste Anionen oder Kationen oder elementar vorliegen.

Radionuklide im Sinne der vorliegenden Erfindung ist ein Sammelbegriff für alle Nuklide, die sich durch Radioaktivität von stabilen Nukliden abheben und die durch gegebenenfalls mehrfach radioaktive Umwandlungen in stabile Nuklide übergehen. Sie können natürlichen Ursprungs sein (z.B. $^{40}K$ oder die Glieder der 3 großen Zerfallsreihen) oder durch Kernreaktionen künstlich erzeugt werden (z.B. Transurane).

Die bislang in Kernkraftwerken eingesetzten Mischbetten sind jedoch bei weitem nicht in der Lage die radioaktiven Substanzen aus dem Wasser zu entfernen. Offensichtlich ist das Grundprinzip der Mischbetten, das einen Kationen- und einen Anionenaustauscher beinhaltet, die zusammen Kationen und Anionen entfernen sollen, nicht in der Lage, die vorhandenen verschiedenen radioaktiven Substanzen ausreichend zu entfernen.

Das Grundprinzip der Mischbetten muss also durch eine weitere Maßnahme erweitert werden, die zu einer zusätzlichen Minderung der Radioaktivität im Wasser führt.

Die Aufgabe der vorliegenden Erfindung war, die im Primärkreislauf einer Kernanlage, bevorzugt eines Kernkraftwerks, vorkommenden Radionuklide möglichst schnell und effektiv zu entfernen um das Entstehen von Sekundärnukliden oder deren Begleitstoffen, wie sie im oben diskutierten Stand der Technik beschrieben werden, beispielsweise dem Crud oder verschiedene Kolloide, von vorne herein zu verhindern oder zumindest deutlich zu reduzieren und pro Zeiteinheit eine ausreichend große Menge gereinigten Wassers zur Verfügung zu stellen.

Die Lösung dieser Aufgabe und somit Gegenstand der vorliegenden Erfindung ist ein Verfahren zur Adsorption von Radionukliden aus Medien, bevorzugt Wässern oder wässrigen Lösungen von Kernanlagen, bevorzugt Kernkraftwerken, Kernanreicherungsanlagen, Kernaufbereitungsanlagen aber auch medizinischen Einrichtungen, durch Kontaktieren des zu behandelnden Wassers oder der wässrigen Lösungen mit einem Mischbett aus einem heterodispersen oder monodispersen, gelförmigen Anionenaustauscher vom Typ I und einem heterodispersen oder monodispersen, gelförmigen Kationenaustauscher sowie wenigstens einer darüber angeordneten Deckschicht eines monodispersen makroporösen Ionenaustauschers mit einer Teilchengröße von 250 bis 450 $\mu$m und mit einem mittleren Perldurchmesser kleiner als der im Mischbett eingesetzten Ionenaustauscher.

Überraschenderweise ermöglicht die Kombination eines Mischbetts mit wenigstens einer darüber angeordneten Deckschicht eines monodispersen makroporösen Ionenaustauschers mit einem mittleren Perldurchmesser kleiner als der im Mischbett eingesetzten Ionenaustauscher die Adsorption von Radionukliden wie sie bei der Kernspaltung anfallen so wirkungsvoll, dass die Wartungsintervalle in Kernkraftwerken verlängert werden können. Darüber hinaus hat sich gezeigt, dass monodisperse, makroporöse Ionenaustauscher in Kombination mit einem Mischbett deutlich weniger schnell durch Sekundäreffekte wie Crud-Ablagerungen oder Ablagerungen von Kolloiden erschöpfen, wodurch die Effektivität dieser Ionenaustauscher über deutlich längere Zeiten gewährleistet bleibt, was wiederum sich positiv auf die Wartungsintervalle in Kernanlagen, insbesondere in Kernkraftwerken, auswirkt.

Die erfindungsgemäße Kombination eines Mischbetts und wenigstens einer darüber anzuordnenden Deckschicht mit einem monodispersen makroporösen Ionenaustauscher mit einem mittleren Perldurchmesser kleiner als der im Mischbett eingesetzten Ionenaustauscher können zu diesem Zweck über Kernanlagen hinaus in allen Bereichen eingesetzt werden, wo Radionuklide in Medien, bevorzugt in wässrigen Lösungen, auftreten.

Bevorzugt können sie eingesetzt werden beim Abbau radioaktiver Rohstoffe, beispielsweise zur Reinigung von Minenabwässern der Wismut- oder Urangewinnung, zur Reinigung von Wässern in Kernkraftwerken, Wiederaufbereitungs-, Kernanreicherungsanlagen oder medizinischen Einrichtungen, besonders bevorzugt zur Reinigung der Wässer in sogenannten Abklingbecken oder von Wässern oder sogenannten "schweren Wässern" in Primärkreisläufen von Kernkraftwerken oder in deren Reinigungskreisläufen.

Über dem Mischbett wird erfindungsgemäß wenigstens eine Deckschicht mit einem monodispersen, makroporösen Ionenaustauscher mit einem mittleren Perldurchmesser kleiner dem der im Mischbett einzusetzenden Perlen aufgebracht, bevorzugt werden zwei, besonders bevorzugt eine Deckschicht aufgebracht, wobei der dabei einzusetzende

Ionenaustauscher bevorzugt ein Chelatharz oder ein Anionenaustauscher, besonders bevorzugt ein starkbasischer Anionenaustauscher, ein mittelbasischer Anionenaustauscher, ein schwachbasischer Anionenaustauscher oder ein Chelatharz ist. Erfindungsgemäß haben diese in der Deckschicht einzusetzenden monodispersen, makroporösen Ionenaustauscher einen mittleren Perldurchmesser der kleiner ist, als der Perldurchmesser der im Mischbett einzusetzenden Ionenaustauscher. Die mittlere Teilchengröße der in der Deckschicht einzusetzenden monodispersen Ionenaustauscher beträgt im Allgemeinen 250 bis 450 $\mu$m, bevorzugt 330 bis 400 $\mu$m.

Eine unter wirtschaftlichen Bedingungen arbeitende mit Ionenaustauschern gefüllte Anlage zur effektiven und schnellen Entfernung radioaktiver Substanzen muss pro Zeiteinheit eine ausreichende Wassermenge reinigen können.

Über die üblicherweise im Primärkreislauf einer Kernanlage installierten Mischbetten werden pro Stunde 10 - 50 Bettvolumen, bevorzugt 20 bis 30 Bettvolumen radioaktiven Wassers filtriert.

Im Rahmen der Arbeiten zur vorliegenden Erfindung hat sich gezeigt, dass sich der Einsatz von ausschließlich monodispersen Ionenaustauscherperlen im Mischbett und in der Deckschicht mit Perldurchmessern im Bereich 200 - 450 $\mu$m verbietet, da dann der Druckverlust in der Säule so groß ist und der Wasserfluss so beschränkt wird , dass die benötigte gereinigte Wassermenge nicht mehr hergestellt werden kann.

Daher dürfen erfindungsgemäß die monodispersen Ionenaustauscher der Deckschicht und die monodispersen oder heterodispersen Ionenaustauscher des Mischbettes keinen zu kleinen mittleren Perldurchmesser haben. Je kleiner der mittlere Duchmesser der Perlen ist, umso größer ist der Widerstand der dem durch die Säule fließenden Wasser entgegengesetzt wird. Der Druckverlust der Flüssigkeit nimmt mit abnehmendem mittleren Perldurchmesser zu (siehe http://www.chemgapedia.de/vsengine/supplement/vsc/de/ch/10/heterogene reaktoren/reaktoren/wirbe lschicht_reaktoren/wirbelpunkt/wirbelpunkt.vscml/Fragment/baf0b0cdfc81163f23bf0efc6d863d3da1.html und Perry's Chemical Engineers Handbook, Robert H. Perry, Don W. Green, 7. Edition, 1997, McGraw Hill Verlag , Chapter 6 , Pages 38-40).

Ferner nimmt mit abnehmendem Perldurchmesser die Gesamtoberfläche der Perlen in einem gleichen Schüttvolumen zu.

Die mittlere Teilchengröße der erfindungsgemäß bevorzugt einzusetzenden monodispersen, gelförmigen Ionenaustauscher im Mischbett beträgt im Allgemeinen 450 bis 1250 $\mu$m, bevorzugt 500 bis 850 $\mu$m, besonders bevorzugt 550 bis 700 $\mu$m.

Aufgrund der Erkenntnisse die im Rahmen der vorliegenden Arbeiten zu dieser Erfindung gesammelt wurden, wird ein Teilchengrößenverhältnis der Ionenaustauscher zwischen Deckschicht und Mischbett im Verhältnis 1-2,2 : 1,01-3, bevorzugt 1-2,25 : 1,5-2,95 angestrebt bzw. in einer erfindungsgemäßen Vorrichtung eingesetzt.

Die erfindungsgemäß in Kernanlagen zu installierenden Mischbetten werden bevorzugt im Abstrom mit dem zu reinigenden radioaktiven Wasser behandelt. Nach beendeter Beladung werden die Ionenaustauscher des Mischbettes ausgebaut und in speziell dafür geschaffene Deponien gelagert.

Die Herstellung monodisperser Ionenaustauscher ist dem Fachmann prinzipiell bekannt. Man unterscheidet neben der Fraktionierung heterodisperser Ionenaustauscher durch Siebung im wesentlichen zwei Direktherstellungsverfahren nämlich das Verdüsen oder Jetting und das Seed-Feed-Verfahren (Saatzulaufverfahren) beim Herstellen der Vorstufen, den monodispersen Perlpolymerisaten. Im Falle des Seed-Feed-Verfahrens wird ein monodisperser Feed eingesetzt, der seinerseits beispielsweise durch Siebung oder durch Jetting erzeugt werden kann. Erfindungsgemäß sind für den Einsatz in der Deckschicht monodisperse Ionenaustauscher hergestellt nach dem Verdüsungsverfahren bevorzugt. Dies trifft aber auch für im Mischbett einzusetzende monodisperse, gelförmige Kationenaustauscher bzw. Anionenaustauscher zu.

Im Gegensatz zu der aus dem Stand der Technik bekannten heterodispersen Teilchengrößenverteilung werden in der vorliegenden Anmeldung als monodispers Teilchengrößenverteilungen bezeichnet, bei denen mindestens 75 Volumen-%, bevorzugt mindestens 85 Volumen-%, besonders bevorzugt mindestens 90 Volumen-% der Teilchen einen Durchmesser besitzen, der in dem Intervall mit der Breite von +/- 10 % des mittleren Durchmessers um den mittleren Durchmesser herum liegt.

Zum Beispiel bei einem Perlpolymerisat mit mittlerem Durchmesser von 0,5 mm liegen mindestens 75 Volumen-%, bevorzugt mindestens 85 Volumen-%, besonders bevorzugt mindestens 90-Volumen-% in einem Größenintervall zwischen 0,45 mm und 0,55 mm, bei einem Stoff mit mittlerem Durchmesser von 0,7 mm liegen mindestens 75 Volumen-%, bevorzugt mindestens 85 Volumen-%, besonders bevorzugt mindestens 90 Volumen-% in einem Größenintervall zwischen 0,77 mm und 0,63 mm.

Das monodisperse Perlpolymerisat, die Vorstufe des Ionenaustauschers, kann beispielsweise hergestellt werden, indem man monodisperse, gegebenenfalls verkapselte Monomertropfen bestehend aus einer monovinylaromatischen Verbindung, einer polyvinylaromatischen Verbindung sowie einem Initiator oder Initiatorgemisch und gegebenenfalls einem Porogen in wässriger Suspension zur Reaktion bringt. Um makroporöse Perlpolymerisate für die Herstellung makroporöser Ionenaustauscher zu erhalten, ist die Anwesenheit von Porogen zwingend erforderlich. In einer bevorzugten Ausführungsform der vorliegenden Erfindung kommen für die Synthese monodisperser makroporöser Perlpolymerisate mikroverkapselte Monomertröpfchen zum Einsatz. Dem Fachmann sind die verschiedenen Herstellverfahren monodisperser Perlpolymerisate sowohl nach dem Jetting Prinzip als auch nach dem Seed-Feed Prinzip aus dem Stand

der Technik bekannt. An dieser Stelle sei verwiesen auf US-A 4 444 961, EP-A 0 046 535, US-A 4 419 245 und WO 93/12167.

Die makroporöse Eigenschaft wird dem in der Deckschicht einzusetzenden Anionen- oder Chelataustauscher bereits bei der Synthese von deren Vorstufen, den Perlpolymerisaten, gegeben. Die Zugabe von sogenanntem Porogen ist hier deshalb zwingend erforderlich. Der Zusammenhang von Ionenaustauschern und ihrer makroporösen Struktur ist in DBP 1045102 (1957); DBP 1113570 (1957) beschrieben. Als Porogen für die Herstellung der erfindungsgemäßen Perlpolymerisate sind vor allem organische Substanzen geeignet, die sich im Monomeren lösen, das Polymerisat aber schlecht lösen bzw. quellen. Bevorzugt werden aliphatische Kohlenwasserstoffe, besonders bevorzugt Octan, Isooctan, Decan, Isododecan sowie Alkohole mit 4 bis 10 Kohlenstoffatomen, insbesondere Butanol, Hexanol oder Octanol eingesetzt. Die in der Deckschicht einzusetzenden Anionen- oder Chelataustauscher weisen erfindungsgemäß immer eine makroporöse Struktur auf. Der Begriff "makroporös" ist dem Fachmann bekannt. Einzelheiten werden beispielsweise in J.R. Millar et al J.Chem.Soc.1963, 218 beschrieben. Die erfindungsgemäß einzusetzenden makroporösen Ionenaustauscher der Deckschicht besitzen ein durch Quecksilberporosimetrie ermitteltes Porenvolumen von 0,1 bis 2,2 ml/g, vorzugsweise von 0,4 bis 1,8 ml/g.

Die Funktionalisierung der nach dem Stand der Technik erhältlichen Perlpolymerisate zu monodispersen, makroporösen Chelatharzen für die Deckschicht ist dem Fachmann ebenfalls weitgehend aus dem Stand der Technik bekannt. So beschreibt beispielsweise EP-A 1 078 690 ein Verfahren zur Herstellung monodisperser Ionenaustauscher mit chelatisierenden, funktionellen Gruppen nach dem sogenannten Phthalimidverfahren, indem man

a) Monomertröpfchen aus mindestens einer monovinylaromatischen Verbindung und mindestens einer polyvinylaromatischen Verbindung sowie einem Porogen und einem Initiator oder einer Initiatorkombination, zu einem monodispersen, vernetzten Perlpolymerisat umsetzt,

b) dieses monodisperse, vernetzte Perlpolymerisat mit Phthalimidderivaten amidomethyliert,

c) das amidomethylierte Perlpolymerisat zu aminomethyliertem Perlpolymerisat umsetzt und

d) das aminomethylierte Perlpolymerisat zu Ionenaustauschern mit chelatisierenden Gruppen reagieren lässt.

Die nach EP-A 1 078 690 herzustellenden monodispersen, makroporösen Chelataustauscher tragen die sich während des Verfahrensschritts d) ausbildenden chelatisierenden Gruppen

$$-(CH_2)_n-NR_1R_2$$

worin

$R_1$ für Wasserstoff oder einen Rest $CH_2$-COOH oder $CH_2$ $P(O)(OH)_2$ steht

$R_2$ für einen Rest $CH_2COOH$ oder $CH_2P(O)(OH)_2$ steht und

n für eine ganze Zahl zwischen 1 und 4 steht.

Im weiteren Verlauf dieser Anmeldung werden derartige Chelatharze als Harze mit Iminodiessigsäure-Gruppen oder mit Aminomethylphosphonsäure-Gruppen bezeichnet.

Alternativ können monodisperse, makroporöse Chelatharze mit dem Zweck des Einsatzes in der Deckschicht auch nach dem Chlormethylierungsverfahren gemäß US-A 4 444 961 hergestellt werden. Dabei werden haloalkylierte Polymere aminiert und das aminierte Polymer mit Chloressigsäure zu Chelatharzen vom Iminodiessigsäuretyp umgesetzt. Man erhält auf diese Weise ebenfalls monodisperse, makroporöse Chelatharze mit Iminodiessigsäure-Gruppen. Chelatharze mit Iminodiessigsäure-Gruppen können auch durch Reaktion von chlormethylierten Perlpolymerisaten mit Iminodiessigsäure erhalten werden.

Ferner kann der in der Deckschicht einzusetzende Chelataustauscher auch alternativ Thioharnstoffgruppen aufweisen. Die Synthese monodisperser, makroporöser Chelataustauscher mit Thioharnstoffgruppen ist dem Fachmann aus US-A 6 329 435 bekannt, wobei aminomethylierte monodisperse Perlpolymerisate mit Thioharnstoff umgesetzt werden. Auch durch Umsetzung von chlormethylierten, monodispersen Perlpolymerisaten mit Thioharnstoff können monodisperse Chelataustauscher mit Thioharnstoffgruppen erhalten werden.

Monodisperse, makroporöse Chelataustauscher mit SH-Gruppen (Mercapto-Gruppen) sind im Rahmen der vorliegenden Erfindung ebenfalls zur Adsorption von Radionukliden in der Deckschicht geeignet. Diese Harze sind in einfacher Weise durch Hydrolyse der letztgenannten Chelataustauscher mit Thioharnstoffgruppen zugänglich.

Aber auch monodisperse, makroporöse Chelataustauscher mit zusätzlichen sauren Gruppen können erfindungsgemäß zur Adsorption von Radionukliden in der Deckschicht über einem Mischbett eingesetzt werden. WO 2005/049190 beschreibt die Synthese monodisperser Chelatharze, die sowohl Carboxylgruppen als auch $-(CH_2)_mNR_1R_2$-Gruppen enthalten, indem man Monomertröpfchen aus einem Gemisch aus einer monovinylaromatischen Verbindung, einer polyvinylaromatischen Verbindung, einer (Meth)acrylverbindung, einem Initiator oder einer Initiator-Kombination sowie gegebenenfalls einem Porogen zu einem vernetzten Perlpolymerisat umsetzt, das erhaltene Perlpolymerisat mit chelatisierenden Gruppen funktionalisiert und in diesem Schritt die copolymerisierten (Meth)acrylverbindungen zu (Meth)acrylsäuregruppen umsetzt, wobei

m für eine ganze Zahl von 1 bis 4 steht,

$R_1$ für Wasserstoff oder einen Rest $CH_2$-$COOR_3$ oder $CH_2P(O)(OR_3)_2$ oder $-CH_2$-S-$CH_2COOR_3$ oder $-CH_2$-S-$C_1$-$C_4$-Alkyl oder $-CH_2$-S-$CH_2CH(NH_2)COOR_3$ oder

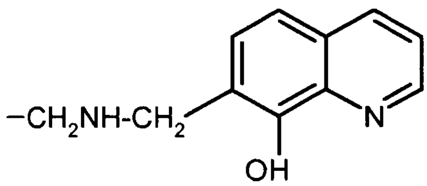

oder seine Derivate oder $C=S(NH_2)$ steht,

$R_2$ für einen Rest $CH_2COOR_3$ oder $CH_2P(O)(OR_3)_2$ oder $-CH_2$-S-$CH_2COOR_3$ oder $-CH_2$-S-$C_1C_4$-Alkyl oder $-CH_2$-S-$CH_2CH(NH_2)COOR_3$ oder

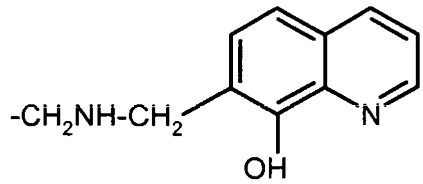

oder seine Derivate oder $C=S(NH_2)$ steht und

$R_3$ für H oder Na oder K steht.

Auch monodisperse, makroporöse Chelatharze mit Picolylamino-Gruppen, bekannt aus DE-A 10 2006 00 49 53 können zur Adsorption von Radionukliden in einer Deckschicht über einem Mischbett eingesetzt werden. Diese sind erhältlich durch

a) Herstellen eines monodispersen, makroporösen Perlpolymerisats auf der Basis von Styrol, Divinylbenzol und Ethylstyrol gemäß dem oben beschriebenen Stand der Technik entweder durch Jetting oder durch einen Seed-Feed Prozess ,

b) Amidomethylieren dieses monodispersen, makroporösen Perlpolymerisats,

c) Umfunktionieren des amidomethylierten Perlpolymerisats im alkalischen Medium zu aminomethyliertem Perlpolymerisat und

d) Funktionalisieren mit Picolylchlorid-Hydrochlorid zum gewünschten monodispersen, Chelataustauscher mit Picolylamino-Gruppen.

Die Herstellung monodisperser, makroporöser, starkbasischer Anionenaustauscher ist dem Fachmann ebenfalls bekannt. Diese Anionenaustauscher können durch Amidomethylierung von vernetzten monodispersen makroporösen Styrolpolymerisaten mit anschließender Quaternierung des erhaltenen Aminomethylats hergestellt werden. Ein

weiterer Syntheseweg für monodisperse, makroporöse, starkbasische Anionenaustauscher ist die Chlormethylierung der genannten Perlpolymerisate mit anschließender Aminierung, beispielsweise mit Trimethylamin oder Dimethylaminoethanol. Erfindungsgemäß bevorzugte monodisperse, makroporöse, starkbasische Anionenaustauscher können nach dem in EP-A 1 078 688 beschriebenen Verfahren erhalten werden.

Monodisperse, makroporöse, schwachbasische Anionenaustauscher lassen sich durch Alkylierung des oben bereits beschriebenen Aminomethylats gewinnen. Durch partielle Alkylierung können die monodispersen, makroporösen, schwachbasischen Anionenaustauscher in monodisperse, makroporöse, mittelbasische Anionenaustauscher überführt werden. Die Herstellung dieser Anionenaustauscher-Typen wird ebenfall in EP-A 1 078 688 beschrieben.

Monodisperse, makroporöse, schwachbasische oder starkbasische Anionenaustauscher vom Acrylattyp sind ebenfalls für den erfindungsgemäßen Einsatz in der Deckschicht über einem Mischbett geeignet. Ihre Herstellung kann beispielsweise gemäß EP-A 1 323 473 erfolgen.

Die monodispersen Perlpolymerisate können aber auch mit in der Fachwelt bekannten Verfahren zur Umwandlung von vernetzten Additionspolymeren mono- und polyethylenisch ungesättigter Monomere in Anionenaustauscherperlen umgewandelt werden. Bei der Herstellung von schwachbasischen Harzen aus poly(vinylaromatischen) Copolymerperlen, wie vernetzten Polystyrolperlen, werden die Perlen vorteilhafterweise halogenalkyliert, vorzugsweise halogenmethyliert, am besten chlormethyliert, und die ionenaktiven Austauschergruppen anschließend an das halogenalkylierte Copolymer angelagert. Die Verfahren für die Halogenalkylierung der vernetzten Additionscopolymere und die an diesen Verfahren beteiligten halogenalkylierenden Mittel sind in der Technik bekannt, worauf sich für die Zwecke dieser Erfindung bezogen wird: US-A 4 444 961 und "Ion Exchange" von F. Helfferich, veröffentlicht 1962 von der McGraw-Hill Book Company, N.Y. Normalerweise besteht die Halogenalkylierungsreaktion aus dem Aufquellen des vernetzten Additionscopolymers mit einem halogenalkylierenden Mittel, vorzugsweise Brommethylmethylether, Chlormethylmethylether oder einer Mischung aus Formaldehyd und Salzsäure, am besten Chlormethylmethylether, und dem anschließenden Umsetzen des Copoplymers und des halogenalkylierenden Mittels in Gegenwart eines Friedel-Crafts-Katalysators, wie Zinkchlorid, Eisenchlorid oder Aluminiumchlorid.

Im Allgemeinen werden die monodispersen, makroporösen Ionenaustauscher aus halogenalkylierten Perlen durch in Kontakt bringen dieser Perlen mit einer Verbindung, die sich mit dem Halogen der Halogenalkylgruppe umsetzt und die bei der Umsetzung eine aktive Ionenaustauschgruppe bildet, hergestellt. Solche Methoden und Verbindungen, um daraus Ionenaustauschharze, d.h. schwachbasische Harze und starkbasische monodisperse, makroporöse Anionenaustauscher herzustellen, sind aus US-A 4 444 961 bekannt. Normalerweise wird ein schwachbasisches monodisperses, makroporöses Anionenaustauscherharz durch in Kontakt bringen des halogenalkylierten Copolymers mit Ammoniak, einem primären Amin oder einem sekundären Amin, hergestellt. Zu den repräsentativen primären oder sekundären Aminen gehören Methylamin, Ethylamin, Butylamin, Cyclohexylamin, Dimethylamin, Diethylamin und ähnliche. Starkbasische monodisperse, makroporöse Ionenaustauscherharze werden hergestellt durch die Verwendung von tertiären Aminen, wie Trimethylamin, Triethylamin, Tributylamin, Dimethylisopropanolamin, Ethylmethylpropylamin oder ähnlichen aminierenden Agenzien.

Aminierung schließt im Allgemeinen das Erwärmen einer Mischung aus den halogenalkylierten Copolymerperlen und mindestens einer stöchiometrischen Menge des aminierenden Agens, d.h. Ammoniak oder Amin, unter Rückfluss auf eine Temperatur ein, die ausreicht, das aminierende Agens mit dem Halogenatom umzusetzen, das an dem Kohlenstoffatom in der alpha Position zum aromatischen Kern des Polymers sitzt. Es ist von Vorteil, wenn gegebenenfalls ein Aufquellmittel, wie Wasser, Ethanol, Methanol, Methylenchlorid, Ethylendichlorid, Dimethoxymethylen oder Kombinationen davon verwendet wird. Normalerweise wird die Aminierung unter solchen Bedingungen durchgeführt, dass die Anionenaustauschstellen in der gesamten Perle gleichmäßig verteilt werden. Eine weitgehend vollständige Aminierung erhält man im Allgemeinen innerhalb von etwa 2 bis etwa 24 Stunden bei einer Reaktionstemperatur zwischen 25 und etwa 150°C.

Weitere Methoden für das Anlagern von anderen Arten von Anionenaustauschgruppen, wie Phosphoniumgruppen, an Copolymerperlen werden beispielsweise in US-A 5 449 462 beschrieben.

Da die Menge an Vernetzer, bevorzugt Divinylbenzol, die bei der Herstellung der Perlen mit Kern- und Hüllenstruktur verwendet wird, sich in Abhängigkeit vom Strukturradius aufgrund der zur Herstellung der Perlen eingesetzten Verfahren verändert, wird ein Verfahren zum Ausdrücken des Vernetzungsgrades, das diese Tatsache widerspiegelt, verwendet. Bei den nicht funktionalisierten Copolymerperlen ist ein Toluolquelltest zur Bestimmung der "effektiven" Vernetzungsdichte brauchbar, wie er beispielsweise in Beispiel 1 der US RE 34.112 angegeben wird.

Weil die in der Deckschicht einzusetzenden monodispersen, makroporösen Ionenaustauscher außergewöhnlich zäh und bruchfest sind, wird die Erzeugung von "Feinanteilen" auf einem Mindestmaß gehalten, was Leistung und Standzeit der Deckschicht und somit der gesamten Einheit aus Mischbett und Deckschicht noch weiter verbessert. Standardverfahren zum Sieben der Harze, um alle beim Transport und Handhaben der Harze erzeugten Feinanteile zu beseitigen, können natürlich beim erstmaligen Beschicken der Anlage verwendet werden, um die Leistung der erfindungsgemäßen Kombination von Mischbett und Deckschicht zu maximieren.

Das Mischbett selber enthält monodisperse oder heterodisperse, gelförmige Anionenaustauscher vom Typ I

und heterodisperse oder monodisperse gelförmige Kationenaustauscher. Bevorzugt werden im Mischbett wiederum monodisperse, gelförmige Anionenaustauscher vom Typ I und monodisperse, gelförmige Kationenaustauscher eingesetzt. Die gelförmige Eigenschaft erhält man durch Verzicht auf Porogen in den oben bereits in Bezug auf die Deckschicht beschriebenen Verfahren zur Herstellung von Anionenaustauschern. Mit der Bezeichnung Typ I Harz werden im Allgemeinen starkbasische Anionenaustauscher mit quartären Trimethylammoniumgruppen bezeichnet (Ullmanns Encyclopädie der technischen Chemie, 4. Aufl., Band 13, Seite 302). Ihre Herstellung erfolgt wie bereits oben beschrieben beispielsweise nach den Methoden der EP-A 10 78 688. Die im Mischbett einzusetzenden gelförmigen Anionenaustauscher weisen bevorzugt einen Vernetzungsgrad von 4 bis 10, besonders bevorzugt von 5 bis 7 auf. Unter Vernetzungsgrad wird der bei der Synthese einzusetzende Anteil an Vernetzer, bevorzugt Divinylbenzol, in Bezug auf die Polymerbasis, bevorzugt Styrol, verstanden. Erfindungsgemäß für das Mischbett insbesondere geeignet ist der von der Lanxess Deutschland GmbH vertriebene gelförmige Anionenaustauscher Lewatit® MonoPlus M 800 KR.

Die erfindungsgemäß im Mischbett einzusetzenden gelförmigen Kationenaustauscher werden ebenfalls nach bekannten Methoden unter Verzicht des Einsatzes von Porogen erhalten.

Die Herstellung heterodisperser gelförmiger, stark saurer Kationenaustauscher wird z.B. in R. Kunin, Ion Exchange Resins , Robert E. Krieger, Publishing Company, Huntington , 1972 Seite 73 ff und in US-A 6 646 017 beschrieben.

Die Herstellung monodisperser, gelförmiger, stark saurer Kationenaustauscher wird in EP-A 0 046 535 und in EP-A 1 222 960 beschrieben.

Die im Mischbett einzusetzenden gelförmigen Kationenaustauscher weisen bevorzugt einen Vernetzungsgrad von 6 bis 16, besonders bevorzugt von 8 bis 12 auf. Unter Vernetzungsgrad wird der bei der Synthese einzusetzende Anteil an Vernetzer, bevorzugt Divinylbenzol, in Bezug auf die Polymerbasis, bevorzugt Styrol, verstanden. Erfindungsgemäß für das Mischbett insbesondere geeignet ist der von der Lanxess Deutschland GmbH vertriebene gelförmige Kationenaustauscher Lewatit® S 200 KR.

Mit der Kombination wenigstens einer Deckschicht aus einem monodispersen, makroporösen Anionenaustauscher oder Chelatharz mit einem mittleren Perldurchmesser kleiner dem der im Mischbett einzusetzenden Perlen und einem Mischbett aus einem gelförmigen Anionenaustauscher und einem gelförmigen Kationenaustauscher ist es möglich, Radionuklide, besonders wie sie in Kernanlagen anfallen, effektiv aus deren Medien, bevorzugt deren wässrigen Lösungen, zu adsorbieren.

Radionuklide ist ein Sammelbegriff für alle Nuklide, die sich durch Radioaktivität von stabilen Nukliden abheben und die durch gegebenenfalls mehrfach radioaktive Umwandlungen in stabile Nuklide übergehen. Sie können natürlichen Ursprungs sein (z.B. $^{40}K$ oder die Glieder der 3 großen Zerfallsreihen) oder durch Kernreaktionen künstlich erzeugt werden (z.B. Transurane).

Wichtige natürliche Radionuklide sind z.B. $^{210}Po$, $^{220}Rn$, $^{226}Ra$, $^{235}U$, $^{238}U$. Sie zerfallen unter $\alpha$- oder $\beta$-Emission; als Begleiterscheinung werden häufig (z.B. bei $^{226}Ra$) $\gamma$-Quanten emittiert, deren Energie ebenfalls mehrere MeV oder keV beträgt. Für die Anwendung der monodispersen makroporösen Ionenaustauscher wesentlich wichtiger sind die künstlich erzeugten Radionuklide, wie sie beispielsweise in Kernanlagen anfallen. Nicht zu kurzlebige Radionuklide treten bei der Kernspaltung von Uran in Reaktoren auf, wenn man verbrauchte Brennelemente z.B. nach dem Purex-Verfahren aufarbeitet. Zu den wichtigsten Spaltprodukten gehören $^{85}Kr$, $^{137}Cs$, $^{89}Sr$, $^{90}Sr$, $^{140}Ba$, $^{95}Zr$, $^{99}Mo$, $^{106}Ru$, $^{144}Ce$, $^{147}Nd$, die ihrerseits wieder Mutternuklide weiterer, meist durch Beta-Zerfall entstehender Tochterprodukte sind.

Durch die Kernreaktion entstehen im Kernreaktor weitere (aus Umgebungsnukliden) Radionuklide, wie beispielsweise $^{31}P$, $^{32}P$, $^{58}Co$, $^{60}Co$, $^{54}Mn$, $^{65}Zn$, $^{187}W$, $^{122}Sb$, $^{124}Sb$, $^{125}Sb$, $^{110}Ag$, $^{197}A$ oder $^{198}Au$.

All die genannten Radionuklide lassen sich durch die erfindungsgemäße Vorrichtung aus Medien, bevorzugt ihren Lösungen, aus Wässern oder ihren wässrigen Lösungen isolieren.

Darüber hinaus können aber auch kurzlebige Radionuklide, wie sie insbesondere in der Medizin zum Einsatz kommen, mit der erfindungsgemäßen Vorrichtung adsorbiert werden, bevorzugt $^{131}In$, $^{99m}Tc$, $^{64}Cu$, $^{197}Hg$, $^{198}Au$, $^{131}J$ bis $^{142}J$, $^{59}Fe$.

Die vorliegende Erfindung betrifft deshalb auch die Verwendung der Kombination eines Mischbetts mit einer Deckschicht aus monodispersem, makroporösem Ionenaustauscher mit einem mittleren Perldurchmesser kleiner dem der im Mischbett einzusetzenden Perlen zur Adsorption von Radionukliden aus ihren Lösungen, bevorzugt Wässern oder ihren wässrigen Lösungen, bevorzugt von $^{210}Po$, $^{220}Ru$, $^{226}Ra$, $^{232}Th$, $^{235}U$, $^{238}U$, $^{85}Kr$, $^{137}Cs$, $^{89}Sr$, $^{90}Sr$, $^{140}Ba$, $^{95}Zr$, $^{99}Mo$ $^{106}Ru$, $^{144}Ce$, $^{147}Nd$, $^{31}P$, $^{32}P$, $^{58}Co$, $^{60}Co$, $^{197}Au$, $^{198}Au$, $^{110}Ag$ $^{131}In$, $^{99}Tc$, $^{64}Cu$, $^{54}Mn$, $^{65}Zn$, $^{187}W$, $^{122}Sb$, $^{124}Sb$, $1^{25}Sb$, $^{197}Hg$, $^{131}J$ bis $^{142}J$, $^{59}Fe$, $^{40}K$, $^{24}Na$.

Je größer der Durchmesser der monodispersen, makroporösen Ionenaustauscher in der Deckschicht ist, umso kleiner ist die Anzahl der monodispersen Perlen insgesamt pro $m^3$ Ionenaustauscher innerhalb der Deckschicht. Je kleiner die Perlen sind, umso mehr Perlen sind in einem $m^3$ Ionenaustauscher vorhanden. Damit verknüpft ist, dass die Gesamtoberfläche aller Perlen, die in einem $m^3$ Ionenaustauscher vorhanden sind, mit abnehmendem Perldurchmesser zunimmt. Dies trifft auch für den Einsatz monodisperser, gelförmiger Anionenaustauscher oder Kationenaustauscher im Mischbett zu.

Es hat sich im Rahmen der vorliegenden Erfindung gezeigt, dass für die Adsorbtion von Radionukliden aus Flüssigkeiten es förderlich ist, wenn die Gesamtoberfäche aller Perlen über die die Adsorbtion erfolgt, möglichst groß ist. Dies gilt insbesondere für die Deckschicht und wird am besten mit monodispersen, makroporösen Ionenaustauschern kleinen Perldurchmessers gewährleistet, da durch die Monodispersität die Diffusionswege der Radionuklide in die Perlen gleich lang sind und zudem durch Perlen kleinen Durchmessers die Gesamtoberfläche vergrößert ist. Durch die Makroporosität des Ionenaustauschers in der Deckschicht wird erfindungsgemäß die Adsorbtion von Radionukliden gefördert.

Im Rahmen der vorliegenden Erfindung wurde gefunden dass die technisch und wirtschaftlich sinnvolle Verkleinerung des mittleren Durchmessers monodisperser Ionenaustauscher zum Erhalt einer möglichst großen Perloberfläche dadurch begrenzt ist, dass der Druckverlust des Flüssigkeitsstromes beim Durchfließen der mit monodispersen Ionenaustauscher Perlen befüllten Säulen mit abnehmendem mittleren Perldurchmesser deutlich zunimmt.

Liegen monodisperse Ionenaustauscher Perlen im Mischbett mit einem mittleren Perldurchmesser von ca. 100 μm vor, so hat sich im Rahmen der Arbeiten zur vorliegenden Erfindung gezeigt, dass der beim Überfiltrieren der Flüssigkeit auftretende Druckverlust bereits so hoch sein kann, dass pro Zeiteinheit nur eine Teilmenge des anfallenden radioaktiven Wassers gereinigt werden kann.

Eine erfindungsgemäße, unter wirtschaftlichen Bedingungen arbeitende und mit Ionenaustauschern gefüllte Anlage zur Aufarbeitung von radioaktiven Wässern muss pro Zeiteinheit eine ausreichende Wasssermenge reinigen können. Erfindungsgemäß wird dieses Problem durch die Deckschicht mit monodispersen Ionenaustauschern mit einem mittleren Perldurchmesser kleiner als dem der Perlen des Mischbettes gelöst, wobei der mittlere Perldurchmesser so groß sein sollte, dass der Durchfluss des radioaktiven Wassers nur mäßig behindert wird - geringer Druckverlust.

Wenn es zu einem "Durchbruch" kommt, können die Ionenaustauscher im Mischbett normalerweise mehrere Male durch Rühren des Bettes reaktiviert werden. Aufgrund des sensiblen Einsatzortes wird das Ionenaustauscherbett normalerweise nicht in dem Sinne regeneriert wie normale Ionenaustauscher, d.h. durch den Einsatz starker Säuren und Basen. Stattdessen wird das erschöpfte Harz mit den aufgefangenen Radionukliden und eventuellen zusätzlichen strahlenden Stoffen normalerweise verfestigt, gesammelt und entsorgt wie anderer leicht verstrahlter Abfall aus Kernkranwerksreaktoren.

Die aus der erfindungsgemäßen Vorrichtung aus Mischbett und Deckschicht austretenden, an Radionukliden abgereicherten Flüssigkeiten können mit Standardeinrichtungen, wie Messgeräten für schwache Scintillation und Radionuklid-spezifischen Analyseverfahren, überwacht werden um zu beobachten, wann eine Durchbruch auftritt, damit zu diesem Zeitpunkt die erforderlichen Schritte unternommen werden können, das Mischbett zu reaktivieren oder das verwendete Harz einzusammeln und zu entsorgen.

Die vorliegende Anmeldung betrifft aber auch eine Vorrichtung zur Adsorption von Radionukliden aus Medien, bevorzugt Wässern oder wässrigen Lösungen wie sie beispielsweise in Kernanlagen, bevorzugt Kernkraftwerken anfallen, durch Kontaktieren des zu behandelnden Mediums, bevorzugt Wasser oder wässrige Lösungen, mit einem Mischbett, das zusätzlich mit wenigstens einer Deckschicht eines monodispersen, makroporösen Ionenaustauschers mit einem mittleren Perldurchmesser kleiner als der im Mischbett eingesetzten Ionenaustauscher versehen ist. In **Fig. I** ist eine Vorrichtung gemäß dem Stand der Technik dargestellt, worin **a** für den Zulauf zum Mischbett steht und **b** für den Ablauf aus dem Mischbett steht. **M** steht für Mischbett. In Fig. **II** ist eine erfindungsgemäße Vorrichtung dargestellt worin **a, b** und **M** dieselben oben genannten Bedeutungen haben und **C** für eine Deckschicht eines monodispersen, makroporösen Ionenaustauschers mit einem mittleren Perldurchmesser kleiner als der im Mischbett eingesetzten Ionenaustauscher steht. In Fig. **III** ist eine erfindungsgemäße Vorrichtung mit zwei Deckschichten **C** und **D** über dem Mischbett **M** dargestellt und **a** und **b** haben dieselben Bedeutungen wie oben beschrieben. Auch die in den Deckschichten **C** und **D** eingesetzten monodispersen, makroporösen Ionenaustauscher weisen jeweils einen mittleren Perldurchmesser kleiner als die im Mischbett eingesetzten Ionenaustauscher auf.

## Untersuchungsmethoden:

### Anzahl perfekter Perlen nach Herstellung

100 Perlen werden unter dem Mikroskop betrachtet. Ermittelt wird die Anzahl der Perlen, die Risse tragen oder Absplitterungen zeigen. Die Anzahl perfekter Perlen ergibt sich aus der Differenz der Anzahl beschädigter Perlen zu 100.

### Nutzbare Kapazität von stark basischen Anionenaustauschern

1000 ml Anionenaustauscher in der Chloridform, d.h. das Stickstoffatom trägt als Gegenion Chlorid, werden in eine Glassäule gefüllt. 2500 ml 4gew.-%ige Natronlauge werden über das Harz in 1 Stunde filtriert. Anschließend wird mit 2 Litern entbastem d.h. entkationisiertem Wasser gewaschen. Dann wird über das Harz mit einer Geschwindigkeit von 10 Litern pro Stunde Wasser mit einer Gesamtanionenhärte von 25 Grad deutscher Härte filtriert. Im Eluat werden die Härte sowie die Restmenge an Kieselsäure analysiert. Bei einem Rest-Kieselsäuregehalt von $\geq 0,1$ mg/l ist die

Beladung beendet.

Aus der Menge Wasser, die über das Harz filtriert wird, der Gesamtanionenhärte des überfiltrierten Wassers, sowie der Menge an eingebautem Harz wird ermittelt, wieviel Gramm CaO pro Liter Harz aufgenommen werden. Die Grammmenge an CaO stellt die nutzbare Kapazität des Harzes in der Einheit Gramm CaO pro Liter Anionenaustauscher dar.

**Bestimmung der Menge an basischen Aminomethylgruppen im aminomethylierten, vernetzten Polystyrol Perlpolymerisat**

100 ml des aminomethylierten Perlpolymerisates werden auf dem Stampfvolumeter eingerüttelt und anschließend mit voll entsalztem Wasser in eine Glassäule gespült. In 1 Stunde und 40 Minuten werden 1000 ml 2gew.-%ige Natronlauge überfiltriert. Anschließend wird voll entsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml voll entsalztem Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: (200 - V) · 20 = mol Aminomethylgruppen pro Liter Harz.

**Bestimmung der Menge an schwach und stark basischen Gruppen in Anionenaustauschern**

100 ml Anionenaustauscher werden in einer Säule in 1 Stunde und 40 Minuten mit 1000 ml 2gew.-%iger Natronlauge beaufschlagt. Anschließend wird das Harz mit voll entsalztem Wasser zur Entfernung des Überschusses an Natronlauge gewaschen.

**Bestimmung der NaCl - Zahl**

50 ml des in der freien Basenform und neutral gewaschenen Austauschers werden in eine Säule gegeben und mit 950 ml 2,5gew-.%iger Natriumchloridlösung beaufschlagt. Der Ablauf wird aufgefangen, mit voll entsalztem Wasser auf 1 Liter aufgefüllt und hiervon werden 50 ml mit 0,1 n ( = 0,1 normaler Salzsäure) Salzsäure gewaschen.

$$\text{Verbrauchte ml 0,1 n Salzsäure x } 4/100 = \text{NaCl} - \text{Zahl in mol/ l Harz}.$$

**Bestimmung der $NaNO_3$ - Zahl**

Dann werden 950 ml 2,5gew.-%iger Natriumnitratlösung überfiltriert. Der Ablauf wird mit voll entsalztem Wasser auf 1000 ml aufgefüllt. Hiervon wird ein aliquoter Teil - 10 ml - abgenommen und auf seinen Chloridgehalt durch Titration mit Quecksilbernitratlösung analysiert.

$$\text{Verbrauchte ml } Hg(NO_3) - \text{Lösung x Faktor} / 17{,}75 = NaNO_3 - \text{Zahl in mol/l Harz.}$$

**Bestimmung der HCl - Zahl**

Das Harz wird mit voll entsalztem Wasser gewaschen und in ein Becherglas gespült. Es wird mit 100 ml 1 n Salzsäure versetzt und 30 Minuten lang stehen gelassen. Die gesamte Suspension wird in eine Glassäule gespült. Weitere 100 ml Salzsäure werden über das Harz filtriert. Das Harz wird mit Methanol gewaschen. Der Ablauf wird mit voll entsalztem Wasser auf 1000 ml aufgefüllt. Hiervon werden ca. 50 ml mit 1 n Natronlauge titriert.

$$(20 - \text{verbrauchte ml 1n Natronlauge}) / 5 = \text{HCl} - \text{Zahl in mol/l Harz.}$$

Die Menge an stark basischen Gruppen ist gleich der Summe aus $NaNO_3$ - Zahl und HCl - Zahl.

Die Menge an schwach basischen Gruppen ist gleich der HCl - Zahl.

**Gleichheitskoefrizient**

Quotient der Perlgrößen bei denen 60 bzw. 10 Massenprozent durch ein Sieb fallen.

**Mittlerer Perldurchmesser**

Perldurchmesser bei dem 50 % der Perlen größer bzw. kleiner sind.

**Bestimmung der Menge an chelatisierenden Gruppen - Totalkapazität (TK) des Harzes**

100 ml Austauscher werden in eine Filtersäule gefüllt und mit 3gew.-%iger Salzsäure in 1,5 Stunden eluiert. Dann wird mit voll entsalztem Wasser gewaschen bis der Ablauf neutral ist.

50 ml regenerierter Ionenaustauscher werden in einer Säule mit 0,1 n Natronlauge (= 0,1 normaler Natronlauge) beaufschlagt. Den Ablauf fängt man jeweils in einem 250 ml Messkolben auf und titriert die gesamte Menge gegen Methylorange mit In Salzsäure.

Es wird solange aufgegeben, bis 250 ml Ablauf einen Verbrauch von 24,5-25 ml an In Salzsäure haben. Nach beendeter Prüfung bestimmt man das Volumen des Austauschers in der Na-Form.

$$\text{Totalkapazität (TK)} = (X \cdot 25 - \Sigma V) \cdot 2 \cdot 10^{-2} \text{ in mol/l Austauscher.}$$

X = Zahl der Ablauffraktionen
Σ V = Gesamtverbrauch in ml an In Salzsäure bei der Titration der Abläufe.

**Beispiele**

**Beispiel 1**

**Herstellung eines makroporösem, monodispersen Chelatharzes mit Iminodiessigsäuregruppen mit einem mittleren Perldurchmesser von 345 μm**

1a) Herstellung des monodispersen, makroporösen Perlpolymerisates auf der Basis von Styrol, Divinylbenzol und Ethylstyrol

In einem 10 l Glasreaktor wurden 3000 g voll entsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wurde auf 25 °C temperiert. Unter Rühren wurde anschließend eine Mischung aus 3200 g von mikroverkapselten Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilchengröße der Monomertröpfchen betrug 260 μm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 μm-Sieb gewaschen und anschließend im Vakuum bei 80°C getrocknet. Man erhielt 1893 g eines kugelförmigen Polymerisates mit einer mittleren Teilchengröße von 250 μm, enger Teilchengrößenverteilung und glatter Oberfläche.

Das Polymerisat war in der Aufsicht kreidig weiß und wies eine Schüttdichte von ca. 350 g/l auf.

1b) Herstellung des amidomethylierten Perlpolymerisates

Bei Raumtemperatur wurden 1596 g Dichlorethan, 470 g Phthalimid und 337 g 29,1gew.-%iges Formalin vorgelegt. Der pH Wert der Suspension wurde mit Natronlauge auf 5,5 bis 6 eingestellt. Anschließend wurde das Wasser destillativ entfernt. Dann wurden 34,5 g Schwefelsäure zudosiert. Das entstehende Wasser wurde destillativ entfernt. Der Ansatz wurde abgekühlt. Bei 30°C wurden 126 g 65%iges Oleum und anschließend 424 g monodisperses Perlpolymerisat, hergestellt nach Verfahrensschritt 1a) eindosiert. Die Suspension wurde auf 70°C erhitzt und weitere 6 Stunden bei dieser Temperatur gerührt. Die Reaktionsbrühe wurde abgezogen, voll entsalztes Wasser wurde hinzudosiert und

Restmengen an Dichlorethan wurden destillativ entfernt.

Ausbeute an amidomethyliertem Perlpolymerisat : 1800 ml

Elementaranalytische Zusammensetzung:

| | |
|---|---|
| Kohlenstoff: | 78,5 Gew. %; |
| Wasserstoff: | 5,2 Gew. %; |
| Stickstoff: | 4,8 Gew. %; |
| Rest: | Sauerstoff. |

1c) Herstellung des aminomethylierten Perlpolymerisates

Zu 1785 ml amidomethyliertem Perlpolymerisat wurden 478 g 50gew.-%ige Natronlauge und 1655 ml voll entsalztes Wasser bei Raumtemperatur zudosiert. Die Suspension wurde auf 180°C erhitzt und 6 Stunden bei dieser Temperatur gerührt.

Das erhaltene Perlpolymerisat wurde mit voll entsalztem Wasser gewaschen.

Ausbeute an aminomethyliertem Perlpolymerisat : 1530 ml

Elementaranalytische Zusammensetzung :

| | |
|---|---|
| Kohlenstoff: | 82,9 Gew. % |
| Stickstoff: | 8,0 Gew. % |
| Wasserstoff: | 8,2 Gew. % |
| HCl- Zahl : | 1,81 mol/l |

Aus der elementaranalytischen Zusammensetzung des aminomethylierten Perlpolymerisates ließ sich errechnen, dass im statistischen Mittel pro aromatischem Kern - herrührend aus den Styrol und Divinylbenzoleinheiten - 0,78 Wasserstoffatome durch Aminomethylgruppen substituiert wurden.

1 d) Herstellung des Ionenaustauschers mit chelatisierenden Iminodiessigsäuregruppen

Zu 1611 ml voll entsalztem Wasser wurden bei Raumtemperatur 1530 ml aminomethyliertes Perlpolymerisat aus Beispiel 1c) dosiert. Die Suspension wurde auf 90°C erhitzt. Bei dieser Temperatur wurden in 4 Stunden zu dieser Suspension 589 g Natriumsalz der Monochloressigsäure dosiert, wobei der pH Wert mit Natronlauge bei 9,2 gehalten wurde. Anschließend wurde die Suspension auf 95°C erhitzt und weitere 6 Stunden bei dieser Temperatur gerührt. Der pH Wert wurde auf 10, 5 eingestellt und gehalten.

Danach wurde die Suspension abgekühlt. Das Harz wurde mit voll entsalztem Wasser gewaschen.

Ausbeute: 2700 ml
Totalkapazität des Harzes: 1,92 mol/l Harz
Mittlerer Perldurchmesser des Harzes : 345 µm
Harzstabilität : 99 % ganze Perlen
Gleichheitskoeffizient: 1,035

Die Gesamtoberfläche aller Perlen, die in einem $m^3$ Chelatharz enthalten sind, betrug 6521739 $m^2$.

**Beispiel 2:**

**Herstellung eines starkbasischen monodispersen, makroporösen Anionenaustauschers mit Trimethylammoniumgruppen und einem mittleren Perldurchmesser von 380 μm**

2 a) Herstellung des amidomethylierten Perlpolymerisates

Bei Raumtemperatur wurden 2440 g Dichlorethan, 659 g Phthalimid und 466 g 29,4gew.-%iges Formalin vorgelegt. Der pH Wert der Suspension wurde mit Natronlauge auf 5,5 bis 6 eingestellt. Anschließend wurde das Wasser destillativ entfernt. Dann wurden 48,3 g Schwefelsäure zudosiert. Das entstehende Wasser wurde destillativ entfernt. Der Ansatz wurde abgekühlt. Bei 30°C wurden 165 g 65%iges Oleum und anschließend 424 g monodisperses Perlpolymerisat, hergestellt nach Verfahrensschritt 1a) eindosiert. Die Suspension wurde auf 70°C erhitzt und weitere 6 Stunden bei dieser Temperatur gerührt. Die Reaktionsbrühe wurde abgezogen, voll entsalztes Wasser wurde hinzudosiert und Restmengen an Dichlorethan wurden destillativ entfernt.
Ausbeute an amidomethyliertem Perlpolymerisat : 2200 ml
Elementaranalytische Zusammensetzung:

| | |
|---|---|
| Kohlenstoff: | 76,6 Gew. %; |
| Wasserstoff: | 4,9 Gew. %; |
| Stickstoff: | 5,4 Gew. %; |
| Rest: | Sauerstoff. |

2 b) Herstellung des aminomethylierten Perlpolymerisates

Zu 2170 ml amidomethyliertem Perlpolymerisat wurden 662 g 50 gew.-%ige Natronlauge und 1313 ml voll entsalztes Wasser bei Raumtemperatur zudosiert. Die Suspension wurde in 2 Stunden auf 180°C erhitzt und 6 Stunden bei dieser Temperatur gerührt.
Das erhaltene Perlpolymerisat wurde mit voll entsalztem Wasser gewaschen.
Ausbeute an aminomethyliertem Perlpolymerisat : 1760 ml
Als Gesamtausbeute - hochgerechnet - ergaben sich 2288 ml.
Elementaranalytische Zusammensetzung:

| | |
|---|---|
| Stickstoff : | 9,6 Gew. % |
| Kohlenstoff: | 78,9 Gew. %; |
| Wasserstoff: | 8,2 Gew. %; |

Aus der elementaranalytischen Zusammensetzung des aminomethylierten Perlpolymerisates ließ sich errechnen, dass im statistischen Mittel pro aromatischem Kern - herrührend aus den Styrol und Divinylbenzoleinheiten - 1,04 Wasserstoffatome durch Aminomethylgruppen substituiert wurden.
Bestimmung der Menge an basischen Gruppen : 2,0 mol/ Liter Harz

2c) Herstellung des starkbasischen Anionenaustauschers

Zu 2891 ml voll entsalztem Wasser wurden 468 ml 50 gew.-%ige Natronlauge und 1720 ml aminomethyliertes Perlpolymerisat aus Beispiel 2b) dosiert. Anschließend wurden 636 Gramm Chlormethan dosiert.
Der Ansatz wurde auf 40°C erwärmt und 16 Stunden bei dieser Temperatur gerührt. Nach dem Abkühlen wurde das Harz zunächst mit Wasser gewaschen. Das Harz wurde in eine Säule überführt und von oben wurden 3000 ml 5 gew.-%ige wässrige Natriumchloridlösung in 30 Minuten überfiltriert.
Anschließend wurde das Harz mit Wasser gewaschen und klassiert.

Harzausbeute : 2930 ml

Mittlerer Perldurchmesser : 380 µm

Gleichheitskoeffizient : 1,035

NaCl - Zahl: 0,593 mol/l Harz

$NaNO_3$ - Zahl: 1,03 mol/ l Harz

HCl - Zahl: 0,005 mol/ l Harz

Harzstabilität : 99 % ganze Perlen

Nutzbare Kapazität: 0,57 mol/ l Harz

## Beispiel 3

### Herstellung eines monodispersen, makroporösen Ionenaustauschers mit chelatisierenden Aminomethylphosphonsäure Gruppen mit einem mittleren Perldurchmesser von 365 µm

**In einem Reaktor wurden 226 ml voll entsalztes Wasser vorgelegt. Dazu wurden 435 ml** aminomethyliertes Perlpolymerisat aus Beispiel 2b) dosiert. Innerhalb von 15 Minuten wurden 227,8 Gramm Dimethylphosphit hinzu dosiert. Danach wurde 30 Minuten nachgerührt. Die Suspension wurde auf 60 °C erhitzt. Innerhalb von 4 Stunden wurden bei 60 °C 735,4 Gramm Schwefelsäure Monohydrat hinzu dosiert. Danach wurde auf Rückflusstemperatur erhitzt. Es wurden 317,8 Gramm 29,27 gew.-%ige Formalin Lösung hinzu dosiert. Es wurde weitere 6 Stunden bei Rückflusstemperatur gerührt.

Danach wurde die Suspension abgekühlt. Das Harz wurde mit voll entsalztem Wasser gewaschen.

Ausbeute in der Wasserstoffform: 640 ml

Das Harz wurde in eine Säule gefüllt. Es wurden 2000 ml 4 gew.-%ige wässrige Natronlauge überfiltriert und danach das Harz mit voll entsalztem Wasser gewaschen und klassiert.

Ausbeute in der Natriumform: 1031 ml

Elementaranalytische Zusammensetzung :

Stickstoff: 4,1 Gew. %

Phosphor: 16,0 Gew. %

Totalkapazität : Menge an schwach sauren Gruppen 2,83 mol/ l

Originalstabilität: 97 % ganze Perlen

## Beispiel 4

### Herstellung eines monodispersen, gelförmigen Perlpolymerisates auf der Basis von Styrol, Divinylbenzol und Ethylstyrol mit einem Gehalt an Divinylbenzol von 9,5 Gew.-%

In einem 10 Liter Glasreaktor wurden 3000 g voll entsalztes Wasser vorgelegt und eine Lösung aus 10 g Gelatine, 16 g di-Natriumhydrogenphosphatdodekahydrat und 0,73 g Resorcin in 320 g voll entsalztem Wasser hinzugefüllt und durchmischt. Die Mischung wurde auf 25 °C temperiert. Unter Rühren wurde anschließend eine Mischung aus 3200 g von mikroverkapselten Monomertröpfchen mit enger Teilchengrössenverteilung aus 9,5 Gew.-% Divinylbenzol und 1,9 Gew.-% Ethylstyrol (eingesetzt als handelsübliches Isomerengemisch aus Divinylbenzol und Ethylstyrol mit 80 % Divinylbenzol), 0,6 Gew.-% Dibenzoylperoxid und 88,6 Gew.-% Styrol gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilchengröße der Monomertröpfchen betrug 430 µm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 µm-Sieb gewaschen und anschließend im Vakuum bei 80°C getrocknet. Man erhielt 1893 g eines kugelförmigen Polymerisates mit einer mittleren Teilchengröße von 425 µm, enger Teilchengrößenverteilung und glatter Oberfläche.

**Beispiel 5**

**Herstellung eines gelförmigen, monodispersen stark sauren Kationenaustauschers mit einem mittleren Perldurchmesser von 594 µm**

In einem Reaktor wurden 490 Gramm 78 gew.-%ige Schwefelsäure bei Raumtemperatur vorgelegt.

Innerhalb von 5 Minuten wurden unter Rühren 200 Gramm monodisperses, gelförmiges Perlpolymerisat aus Beispiel 4 hinzu dosiert. Anschließend wurde 5 Minuten bei Raumtemperatur nachgerührt. In 5 Minuten wurden 60 ml 1,2 Dichlorethan hinzu dosiert. Anschließend wurde in 15 Minuten auf 40 °C erwärmt und weitere 30 Minuten bei dieser Temperatur gerührt. Die Suspension wurde in 1 Stunde auf 80 °C erhitzt. Hierbei wurden 427 g Oleum 65 gew.%ig in 30 Minuten hinzu dosiert. Die Suspension wurde in 30 Minuten auf 115°C erhitzt. Es wurde weitere 3 Stunden bei 115°C gerührt. Das frei werdende 1,2 Dichlorethan wurde destillativ aus dem System entfernt.

In einer Stunde wurde auf 135°C erwärmt. Es wurde weitere 3 Stunden bei 135°C gerührt.

Nach dem Abkühlen auf Raumtemperatur wurde die Suspension mit 78 gew.-%iger Schwefelsäure in eine Glassäule gespült und Schwefelsäuren abnehmender Konzentration beginnend mit 78 gew.-%iger Schwefelsäure wurden überfiltriert. Anschließend wurde mit voll entsalztem Wasser gewaschen.

Harzausbeute : 840 ml

Totalkapazität in der Wasserstoffform : 2,20 mol/ l Harz

Harzstabilität : 99 % ganze Perlen

Mittlerer Perldurchmesser : 594 µ

**Beispiel 6**

**Herstellung eines monodispersen, gelförmigen Perlpolymerisates auf der Basis von Styrol, Divinylbenzol und Ethylstyrol mit einem Gehalt an Divinylbenzol von 6,0 Gew.-%**

In einem 10 Liter Glasreaktor wurden 3000 g voll entsalztes Wasser vorgelegt und eine Lösung aus 10 g Gelatine, 16 g di-Natriumhydrogenphosphatdodekahydrat und 0,73 g Resorcin in 320 g voll entsalztem Wasser hinzugefüllt und durchmischt. Die Mischung wurde auf 25 °C temperiert. Unter Rühren wurde anschließend eine Mischung aus 3200 g von mikroverkapselten Monomertröpfchen mit enger Teilchengrössenverteilung aus 6,0Gew.-% Divinylbenzol und 1,1 Gew.-% Ethylstyrol (eingesetzt als handelsübliches Isomerengemisch aus Divinylbenzol und Ethylstyrol mit 80 % Divinylbenzol), 0,6 Gew.-% Dibenzoylperoxid und 92,9Gew.-% Styrol hinzu gegeben, wobei die Mikrokapsel aus einem mit Formaldehyd gehärteten Komplexkoazervat aus Gelatine und einem Copolymer aus Acrylamid und Acrylsäure bestand und 3200 g wässriger Phase mit einem pH-Wert von 12 zugesetzt. Die mittlere Teilchengröße der Monomertröpfchen betrug 440 µm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 µm-Sieb gewaschen und anschließend im Vakuum bei 80°C getrocknet. Man erhielt 1893 g eines kugelförmigen Polymerisates mit einer mittleren Teilchengröße von 430 µm, enger Teilchengrößenverteilung und glatter Oberfläche.

**Beispiel 7**

**Herstellung eines gelförmigen, monodispersen Anionenaustauschers mit stark basischen Trimethylammoniumgruppen mit einem mittleren Perldurchmesser von 610 μm**

7a) Chlormethylierung des monodispersen, gelförmigen Perlpolymerisates aus Beispiel 6

In einem 2 Liter Sulfierkolben wurden 1120 ml einer Mischung aus Monochlordimethylether, Methylal und Eisen (III)chlorid (14,8 g/l) vorgelegt und anschließend 240 g Perlpolymerisat aus Beispiel 6 zugegeben. Das Gemisch wurde auf 50 °C erhitzt und 6 h unter Rückfluss im Bereich von 50-55 °C gerührt. Während der Reaktionszeit wurden Salzsäure und leicht siedende Organika abgetrieben bzw. abdestilliert. Anschließend wurde die Reaktionssuspension hintereinander mit 1200 ml Methanol, 2400 ml Methylal, 3 Mal mit 1200 ml Methanol und zum Schluss mit voll entsalztem Wasser intensiv gewaschen. Man erhielt 590 ml wasserfeuchtes, monodisperses, gelförmiges, chlormethyliertes Perlpolymerisat mit einem Chlorgehalt von 20,1 Gew.-%.

7b) Umsetzung des gelförmigen, monodispersen, chlormethylierten Perlpolymerisates aus Beispiel 7a) zu einem monodispersen, stark basischen Anionenaustauscher mit Trimethylammoniumgruppen und einem mittleren Perldurchmesser von 610 μm

Im Autoklav wurden 779 ml Methanol vorgelegt. Dazu dosierte man 500 ml nutschfeuchtes, chlormethyliertes Perlpolymerisat aus Beispiel 7a) und 330 Gramm 45 gew.-%ige, wässrige Trimethylammoniumlösung.

Die Suspension wurde auf 120°C erwärmt und weitere 3 Stunden bei dieser Temperatur gerührt. Nach dem Abkühlen auf Raumtemperatur wurde die Mutterlauge abgesaugt, das Harz wurde mit 800 ml voll entsalztem Wasser versetzt und 30 Minuten bei Raumtemperatur gerührt. Das Wasser wurde abdestilliert und durch 2000 ml 3gew.-% ige wässrige Salzsäure ersetzt. Die Suspension wurde 4 Stunden bei 50°C gerührt. Nach dem Abkühlen wurde die flüssige Phase abdestilliert, das Harz mit Wasser aufgenommen und in einer Säule von unten mit 6 Bettvolumen Wasser eluiert.

Ausbeute : 1360 ml

Anzahl perfekter Perlen : 98 %

Mittlerer Perldurchmesser : 610 μm

Totalkapazität :

$NaNO_3$ - Zahl : 1,23 mol/l

NaCl - Zahl: 0,56 mol/l

HCl - Zahl : 0,03 mol/l

VE-Wasser oder voll entsalztes Wasser im Sinne der vorliegenden Erfindung ist gekennzeichnet, indem es eine Leitfähigkeit von 0,1 bis 10 μS besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

**Beispiel 8**

**Radiochemischer Labortest**

Für die Bestimmung der Dekontaminationsfaktoren wurden über eine Probenahmebox 7 x 1Liter sauerstoffgesättigte Proben aus dem Primärkreislauf eines Kernkraftwerks entnommen. 1 Liter unbehandelte Probe diente als Ausgangsmessung für die Berechnung der Dekontaminationsfaktoren. Dann liefen jeweils 2 Liter aus dem Primärkreislauf mit einer Durchflussgeschwindigkeit von 2 Liter/h durch eine erfindungsgemäße Vorrichtung enthaltend die Kombination eines Mischbetts aus 200 ml Lewatit® S200KR und Lewatit® M800 KR sowie einer Deckschicht aus 100 ml Lewatit® TP 207 MDS OH. Die gesamte Säule maß 800 mm in der Höhe und 40 mm im Durchmesser worin das Mischbett 300 mm und die Deckschicht 75 mm einnahmen. Die Harzschicht wurde mit Borsäure bzw. LiOH-Lösung gesättigt. Die Versuche wurden an zwei aufeinander folgenden Tagen wiederholt wobei das Beladungswasser (7 Liter sauerstoffgesättigtes Wasser) aus dem Primärkreislauf eines Kernkraftwerks entnommen wurde. 1 Liter diente als Ausgangsmessung: filtriert wurden jeweils 2 x 1 Liter innerhalb 1 Stunde über die erfindungsgemäße Vorrichtung. Der erste Liter Filterablauf wurde verworfen, der zweite diente dann zur Messung der $^{60}$Co-Konzentration. In der folgenden Tab.1 steht YA für das unbehandelte Kreislaufwasser des Primärkreislaufs eines Kernkraftwerks, TC12 für ein Mischbett ohne Deckschicht bzw. ab dem 29. Mai 2007 für die erfindungsgemäße Vorrichtung mit dem oben bezeichneten Mischbett und einer Deckschicht aus Lewatit® TP 207 MDS OH. Mit der erfindungsgemäßen Vorrichtung wurde erst zum 29. Mai 2007 begonnen (2007-05-29). (siehe Tab.1)

**Tab.1**

| Untersuchtes Wasser | Datum | Radioaktivität in Bq/m$^3$ für $^{60}$Co |
|---|---|---|
| TC12 ohne Deckschicht | 2007-05-10 | $1,00.10^6$ |
| YA | 2007-05-10 | $8,20\cdot10^6$ |
| YA | 2007-05-14 | $5,90\cdot10^6$ |
| TC12 ohne Deckschicht | 2007-05-15 | $3,00\cdot10^5$ |
| YA | 2007-05-15 | $8,30\cdot10^6$ |
| YA | 2007-05-16 | $6,20\cdot10^6$ |
| YA | 2007-05-21 | $8,60\cdot10^6$ |
| TC12 ohne Deckschicht | 2007-05-22 | $2,40\cdot10^5$ |
| YA | 2007-05-22 | $9,00\cdot10^6$ |
| YA | 2007-05-24 | $5,50\cdot10^6$ |
| TC12 mit Deckschicht | 2007-05-29 | $1,30\cdot10^5$ |
| YA | 2007-05-29 | $9,80\cdot10^6$ |
| YA | 2007-05-30 | $8,40\cdot10^6$ |
| YA | 2007-05-31 | $1,50\cdot10^7$ |
| YA | 2007-06-04 | $6,40\cdot10^6$ |
| TC12 mit Deckschicht | 2007-06-05 | $1,80\cdot10^5$ |
| YA | 2007-06-05 | $7,20\cdot10^6$ |
| YA | 2007-06-06 | $7,80\cdot10^6$ |
| YA | 2007-06-11 | $8,90\cdot10^6$ |
| YA | 2007-06-12 | $9,20\cdot10^6$ |
| YA | 2007-06-14 | $1,00\cdot10^7$ |
| TC 2 mit Deckschicht | 2007-06-14 | $1,40\cdot10^5$ |
| YA | 2007-06-18 | $8,20\cdot10^6$ |
| TC12 mit Deckschicht | 2007-06-19 | $1,80\cdot10^5$ |
| YA | 2007-06-19 | $8,00\cdot10^6$ |
| YA | 2007-06-21 | $1,00\cdot10^7$ |
| YA | 2007-06-25 | $8,50\cdot10^6$ |
| YA | 2007-06-27 | $1,10\cdot10^7$ |
| TC12 mit Deckschicht | 2007-06-28 | $7,10\cdot10^5$ |
| YA | 2007-06-28 | $9,60\cdot10^6$ |
| YA | 2007-07-02 | $8,20\cdot10^6$ |
| YA | 2007-07-05 | $7,70\cdot10^6$ |

(fortgesetzt)

| Untersuchtes Wasser | Datum | Radioaktivität in $Bq/m^3$ für $^{60}Co$ |
|---|---|---|
| YA | 2007-07-06 | $1{,}10 \cdot 10^7$ |
| TC12 mit Deckschicht | 2007-07-06 | $1{,}30 \cdot 10^5$ |
| YA | 2007-07-09 | $1{,}20 \cdot 10^7$ |
| TC12 mit Deckschicht | 2007-07-10 | $1{,}60 \cdot 10^5$ |
| YA | 2007-07-10 | $8{,}40 \cdot 10^6$ |
| YA | 2007-07-12 | $9{,}70 \cdot 10^6$ |
| YA | 2007-07-16 | $7{,}90 \cdot 10^6$ |

Den Messdaten in Tab. 1 ist deutlich zu entnehmen, wie durch Einsatz einer erfindungsgemäßen Vorrichtung gemäß Fig. 2 der Gehalt an $^{60}Co$ ab dem 29.Mai 2007 abgenommen hat. Die Versuche im Rahmen der vorliegenden Erfindung lassen vermuten, dass die Wirkungsweise der monodispersen, makroporösen Ionenaustauscher in der Deckschicht nicht im eigentlichen Ionenaustausch begründet ist, sondern auch in einer Adsorption der kolloiden, radioaktiven Partikel begründet liegt.

**Patentansprüche**

1. Verfahren zur Adsorption von Radionukliden aus Medien, bevorzugt Wässern oder wässrigen Lösungen, **dadurch gekennzeichnet, dass** man diese mit einem Mischbett aus einem gelförmigen Anionenaustauscher und einem gelförmigen Kationenaustauscher und zusätzlich wenigstens einer Deckschicht eines monodispersen, makroporösen Ionenaustauschers mit einer Teilchengröße von 250 bis 450 µm und einem mittleren Perldurchmesser kleiner als der im Mischbett eingesetzten Ionenaustauscher in Kontakt bringt.

2. Verfahren gemäß Anspruch 1, **dadurch gekennzeichnet, dass** die zu behandelnden Medien Wässer oder wässrige Lösungen aus Kernanlagen, bevorzugt in Kernkraftwerken, Wiederaufbereitungsanlagen, Kernanreicherungsanlagen oder aus medizinischen Einrichtungen, sind.

3. Verfahren gemäß Anspruch 1 oder 2, **dadurch gekennzeichnet, dass** die in wenigstens einer Deckschicht einzusetzenden monodispersen, makroporösen Ionenaustauscher Chelatharze oder Anionenaustauscher sind.

4. Verfahren gemäß Anspruch 1,2 oder 3, **dadurch gekennzeichnet, dass** die in wenigstens einer Deckschicht einzusetzenden monodispersen, makroporösen Ionenaustauscher eine Teilchengröße von 330 bis 400 µm aufweisen.

5. Verfahren gemäß Anspruch 3 oder 4, **dadurch gekennzeichnet, dass** als Anionenaustauscher starkbasische, mittelbasische oder schwachbasische Anionenaustauscher eingesetzt werden.

6. Verfahren gemäß einem der Ansprüche 1 bis 5, **dadurch gekennzeichnet, dass** als Radionuklide $^{210}Po$, $^{220}Ru$, $^{226}Ra$, $^{232}Th$, $^{235}U$, $^{238}U$, $^{85}Kr$, $^{137}Cs$, $^{89}Sr$, $^{90}Sr$, $^{140}Ba$, $^{95}Zr$, $^{99}Mo$, $^{106}Ru$, $^{144}Ce$, $^{147}Nd$, $^{31}P$, $^{32}P$, $^{58}Co$, $^{60}Co$, $^{110}Ag$, $^{54}Mn$, $^{65}Zn$, $^{187}W$, $^{122}Sb$, $^{124}Sb$, $^{125}Sb$, $^{197}Au$, $^{198}Au$, $^{131}In$, $^{99}Tc$, $^{64}Cu$, $^{197}Hg$, $^{131}J$ bis $^{142}J$, $^{59}Fe$, $^{40}K$, $^{24}Na$ adsorbiert werden.

7. Verfahren gemäß einem der Ansprüche 1 bis 6, **dadurch gekennzeichnet, dass** die in der Deckschicht einzusetzenden monodispersen, makroporösen Ionenaustauscher ein Porenvolumen von 0,1 bis 2,2 ml/g, vorzugsweise von 0,4 bis 1,8 ml/g, aufweisen.

8. Verfahren gemäß Anspruch 7, **dadurch gekennzeichnet, dass** die Porosität durch Zugabe von 40 bis 150 Gew.-Teilen Porogen, bezogen auf 100 Gew.-Teile der Summe aus Monomer und Vernetzer bei der Herstellung der Perlpolymerisate als Vorstufe der Ionenaustauscher erzielt wird.

9. Verfahren gemäß Anspruch 1, **dadurch gekennzeichnet, dass** der Anionenaustauscher einen Vernetzungsgrad von 4 bis 10 und der Kationenaustauscher einen Vernetzungsgrad von 6 bis 16 aufweist.

10. Verwendung eines Mischbettes aus gelförmigem Anionenaustauscher und gelförmigem Kationenaustauscher mit wenigstens einer zusätzlichen Deckschicht aus einem monodispersen makroporösen Ionenaustauscher mit einer Teilchengröße von 250 bis 450 μm mit einem mittleren Perldurchmesser kleiner als der im Mischbett eingesetzten Ionenaustauscher zur Absorption von Radionukliden aus Medien, bevorzugt Wässern oder wässrigen Lösungen wie sie in Kemanlagen, bevorzugt Kernkraftwerken, Wiederaufbereitungsanlagen, Kernanreicherungsanlagen oder in medizinischen Einrichtungen, anfallen.

11. Vorrichtung bestehend aus einem Mischbett eines gelförmigen Anionenaustauschers und gelförmigen Kationenaustauschers mit wenigstens einer zusätzlichen Deckschicht aus einem monodispersen makroporösen Ionenaustauscher mit einer Teilchengröße von 250 bis 450 μm mit einem mittleren Perldurchmesser kleiner als der im Mischbett eingesetzten Ionenaustauscher zur Absorption von Radionukliden aus Medien, bevorzugt Wässern oder wässrigen Lösungen wie sie in Kemanlagen, bevorzugt Kernkraftwerken, Wiederaufbereitungsanlagen, Kernanreicherungsanlagen oder in medizinischen Einrichtungen, anfallen.

## Claims

1. Process for the adsorption of radionuclides from media, preferably waters or aqueous solutions, **characterized in that** these are contacted with a mixed bed consisting of a gel-type anion exchanger and a gel-type cation exchanger and in addition at least one covering layer of a monodisperse, macroporous ion exchanger having a particle size of 250 to 450 μm and having a median bead diameter smaller than the ion exchanger used in the mixed bed.

2. Process according to Claim 1, **characterized in that** the media to be treated are waters or aqueous solutions from nuclear plants, preferably nuclear power plants, reprocessing plants, nuclear enrichment plants or else medical facilities.

3. Process according to Claim 1 or 2, **characterized in that** the monodisperse macroporous ion exchangers which are to be used in at least one covering layer are chelate resins or anion exchangers.

4. Process according to Claim 1, 2 or 3, **characterized in that** the monodisperse, macroporous ion exchangers to be used in at least one covering layer have a particle size of 330 to 400 μm.

5. Process according to Claim 3 or 4, **characterized in that**, as anion exchangers, use is made of strongly basic, medium-basic or weakly basic anion exchangers.

6. Process according to one of Claims 1 to 5, **characterized in that** the radionuclides which are adsorbed are $^{221}Po$, $^{220}Ru$, $^{226}Ra$, $^{232}Th$, $^{235}U$, $^{238}U$, $^{85}Kr$, $^{137}Cs$, $^{89}Sr$, $^{90}Sr$, $^{140}Ba$, $^{95}Zr$, $^{99}Mo$, $^{106}Ru$, $^{144}Ce$, $^{147}Nd$, $^{31}P$, $^{32}P$, $^{58}Co$, $^{60}Co$, $^{110}Ag$, $^{54}Mn$, $^{65}Zn$, $^{187}W$, $^{122}Sb$, $^{124}Sb$, $^{125}Sb$, $^{197}Au$, $^{198}Au$, $^{131}In$, $^{99}Tc$, $^{64}Cu$, $^{197}Hg$, $^{131}I$ to $^{142}I$, $^{59}Fe$, $^{40}K$, $^{24}Na$.

7. Process according to one of Claims 1 to 6, **characterized in that** the monodisperse macroporous ion exchangers which are to be used in the covering layer have a pore volume of 0.1 to 2.2 ml/g, preferably 0.4 to 1.8 ml/g.

8. Process according to Claim 7, **characterized in that** the porosity is achieved by adding 40 to 150 parts by weight of porogen, based on 100 parts by weight of the sum of monomer and crosslinker in the production of the polymer beads as precursor of the ion exchangers.

9. Process according to Claim 1, **characterized in that** the anion exchanger has a degree of crosslinking of 4 to 10 and the cation exchanger has a degree of crosslinking of 6 to 16.

10. Use of a mixed bed of a gel-type anion exchanger and gel-type cation exchanger having at least one additional covering layer of a monodisperse macroporous ion exchanger having a particle size of 250 to 450 μm and having a median bead diameter smaller than the ion exchanger used in the mixed bed for the absorption of radionuclides from media, preferably waters or aqueous solutions as arise in nuclear plants, preferably nuclear power plants, reprocessing plants, nuclear enrichment plants or in medical facilities.

11. Device consisting of a mixed bed of a gel-type anion exchanger and gel-type cation exchanger having at least one additional covering layer of a monodisperse macroporous ion exchanger having a particle size of 250 to 450 μm

and having a median bead diameter smaller than the ion exchanger used in the mixed bed for the absorption of radionuclides from media, preferably waters or aqueous solutions as arise in nuclear plants, preferably nuclear power plants, reprocessing plants, nuclear enrichment plants or in medical facilities.

## Revendications

1. Procédé d'adsorption de radionucléides à partir de fluides, de préférence à partir d'eaux ou de solutions aqueuses, **caractérisé en ce que** l'on met ceux-ci en contact avec un lit mixte composé d'un échangeur d'anions en forme de gel et d'un échangeur de cations en forme de gel et en outre d'au moins une couche de couverture d'un échangeur d'ions macroporeux monodispersé présentant une taille de particules de 250 à 450 μm et un diamètre moyen de perles inférieur à celui des échangeurs d'ions utilisés dans le lit mixte.

2. Procédé selon la revendication 1, **caractérisé en ce que** les fluides à traiter sont des eaux ou des solutions aqueuses provenant d'installations nucléaires, de préférence de centrales électriques nucléaires, d'installations de retraitement, d'installations d'enrichissement nucléaires ou de dispositifs médicaux.

3. Procédé selon la revendication 1 ou 2, **caractérisé en ce que** les échangeurs d'ions macroporeux monodispersés à utiliser dans ladite au moins une couche de couverture sont des résines de chélate ou des échangeurs d'anions.

4. Procédé selon la revendication 1, 2 ou 3, **caractérisé en ce que** les échangeurs d'ions macroporeux monodispersés à utiliser dans ladite au moins une couche de couverture présentent une taille de particules de 330 à 400 μm.

5. Procédé selon la revendication 3 ou 4, **caractérisé en ce que** l'on utilise comme échangeurs d'anions des échangeurs d'anions fortement basiques, moyennement basiques ou faiblement basiques.

6. Procédé selon l'une quelconque des revendications 1 à 5, **caractérisé en ce que** l'on adsorbe comme radionucléides $^{210}Po$, $^{220}Ru$, $^{226}Ra$, $^{232}Th$, $^{235}U$, $^{238}U$, $^{85}Kr$, $^{137}Cs$, $^{89}Sr$, $^{90}Sr$, $^{140}Ba$, $^{95}Zr$, $^{99}Mo$, $^{106}Ru$, $^{144}Ce$, $^{147}Nd$, $^{31}P$, $^{32}P$, $^{58}Co$, $^{60}Co$, $^{110}Ag$, $^{54}Mn$, $^{65}Zn$, $^{187}W$, $^{122}Sb$, $^{124}Sb$, $^{125}Sb$, $^{197}Au$, $^{198}Au$, $^{131}In$, $^{99}Tc$, $^{64}Cu$, $^{197}Hg$, $^{131}I$ à $^{142}I$, $^{59}Fe$, $^{40}K$, $^{24}Na$.

7. Procédé selon l'une quelconque des revendications 1 à 6, **caractérisé en ce que** les échangeurs d'ions macroporeux monodispersés à utiliser dans ladite au moins une couche de couverture présentent un volume de pores de 0,1 à 2,2 ml/g, de préférence de 0,4 à 1,8 ml/g.

8. Procédé selon la revendication 7, **caractérisé en ce que** l'on obtient la porosité par addition de 40 à 150 parties en poids de porogène, rapportées à 100 parties en poids de la somme de monomère et d'agent de réticulation lors de la production des polymères de perles comme étape préalable des échangeurs d'ions.

9. Procédé selon la revendication 1, **caractérisé en ce que** l'échangeur d'anions présente un degré de réticulation de 4 à 10 et l'échangeur de cations un degré de réticulation de 6 à 16.

10. Utilisation d'un lit mixte composé d'un échangeur d'anions en forme de gel et d'un échangeur de cations en forme de gel avec au moins une couche de couverture supplémentaire constituée d'un échangeur d'ions macroporeux monodispersé présentant une taille de particules de 250 à 450 μm avec un diamètre moyen de perles inférieur à celui des échangeurs d'ions utilisés dans le lit mixte pour l'adsorption de radionucléides à partir de fluides, de préférence à partir d'eaux ou de solutions aqueuses comme celles qui apparaissent dans des installations nucléaires, de préférence des centrales électriques nucléaires, des installations de retraitement, des installations d'enrichissement nucléaires ou des dispositifs médicaux.

11. Dispositif se composant d'un lit mixte composé d'un échangeur d'anions en forme de gel et d'un échangeur de cations en forme de gel avec au moins une couche de couverture supplémentaire constituée d'un échangeur d'ions macroporeux monodispersé présentant une taille de particules de 250 à 450 μm avec un diamètre moyen de perles inférieur à celui des échangeurs d'ions utilisés dans le lit mixte, pour l'adsorption de radionucléides à partir de fluides, de préférence à partir d'eaux ou de solutions aqueuses comme celles qui apparaissent dans des installations nucléaires, de préférence des centrales électriques nucléaires, des installations de retraitement, des installations d'enrichissement nucléaires ou des dispositifs médicaux.

Fig.I

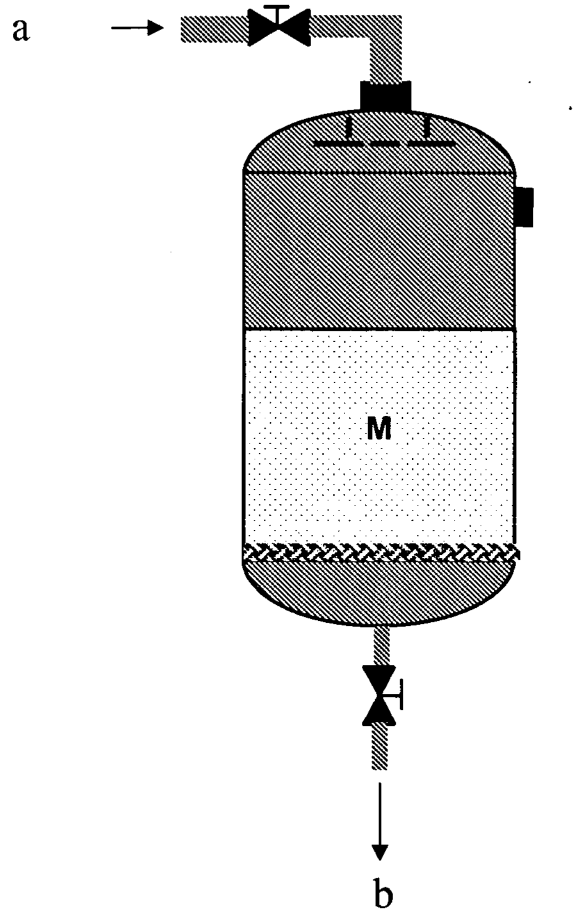

Fig.II

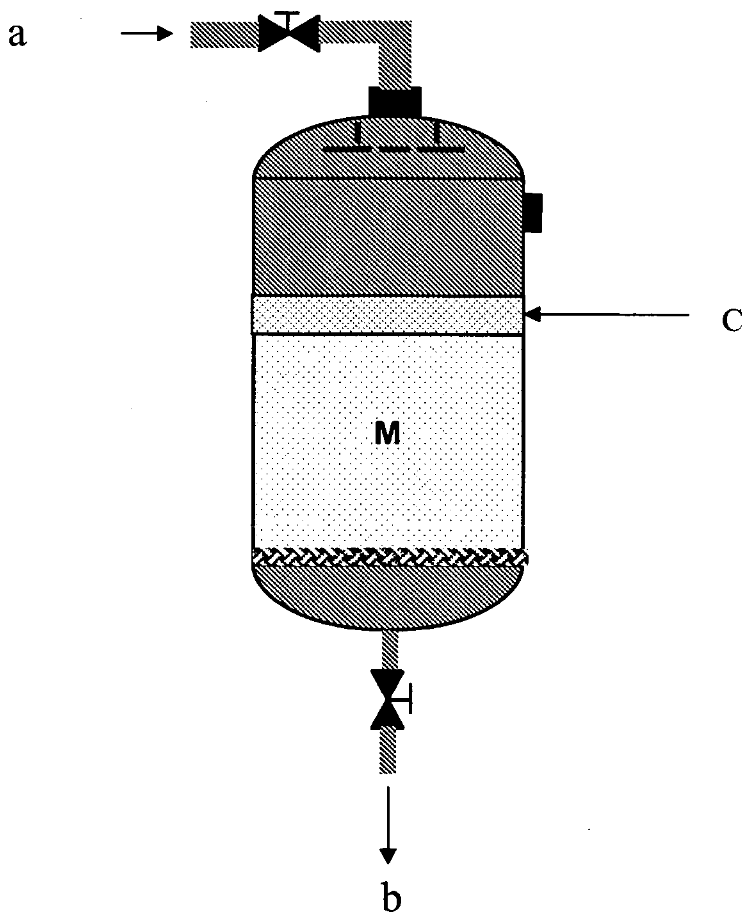

Fig.III

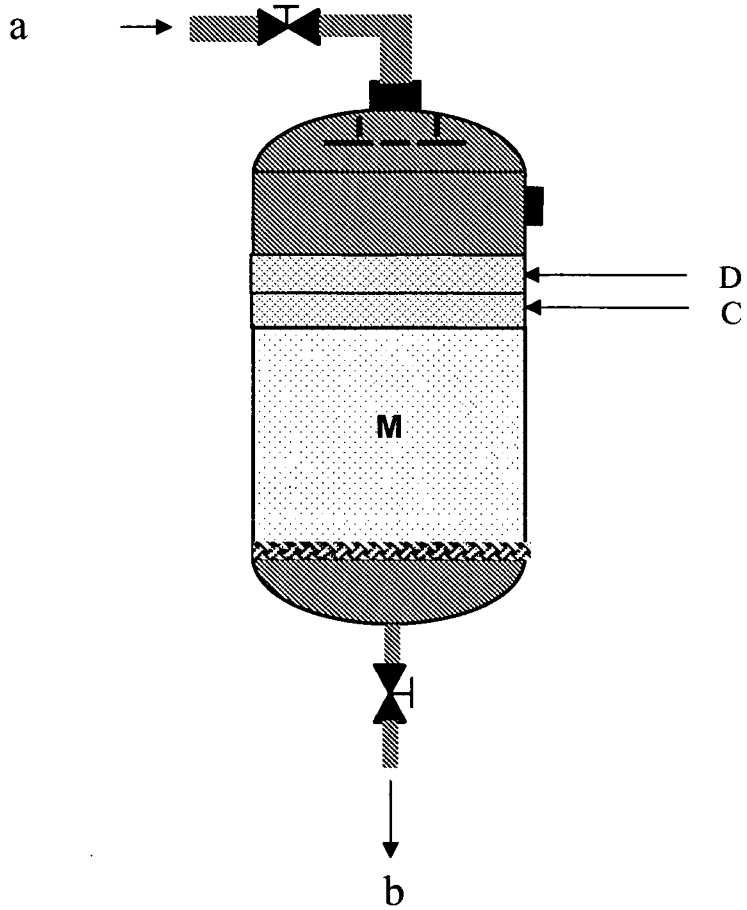

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US RE34112 E
- DE 4338851 A1
- DE 19747076 A1
- US 5308876 A
- US 4444961 A
- EP 0046535 A
- US 4419245 A
- WO 9312167 A
- EP 1078690 A
- US 6329435 A
- WO 2005049190 A
- DE 102006004953 A
- EP 1078688 A
- EP 1323473 A
- US 5449462 A
- US 6646017 A
- EP 1222960 A


### In der Beschreibung aufgeführte Nicht-Patentliteratur


- **ROBERT H. PERRY ; DON W. GREEN.** Perry's Chemical Engineers Handbook. McGraw Hill Verlag, 1997, 38-40
- **J.R. MILLAR et al.** *J.Chem.Soc.,* 1963, 218
- **VON F. HELFFERICH.** Ion Exchange. McGraw-Hill Book Company, 1962
- Ullmanns Encyclopädie der technischen Chemie. vol. 13, 302
- **R. KUNIN.** Ion Exchange Resins. Publishing Company, 1972, 73 ff